**Europäisches Patentamt**

(19) **European Patent Office**

**Office européen des brevets**

(11) Veröffentlichungsnummer : **0 019 105**
**B1**

(12) **EUROPÄISCHE PATENTSCHRIFT**

(45) Veröffentlichungstag der Patentschrift :
22.06.83

(51) Int. Cl.³ : **B 01 D 53/04// C12P7/40**

(21) Anmeldenummer : **80102162.7**

(22) Anmeldetag : **22.04.80**

(54) Druckwechsel-Adsorptionsverfahren und seine Anwendung bei der Herstellung organischer Säuren.

(30) Priorität : **24.04.79 DE 2916585**

(43) Veröffentlichungstag der Anmeldung :
**26.11.80 Patentblatt 80/24**

(45) Bekanntmachung des Hinweises auf die Patenterteilung : **22.06.83 Patentblatt 83/25**

(84) Benannte Vertragsstaaten :
**BE DE FR GB IT NL**

(56) Entgegenhaltungen :
**EP A 0 009 217**
**DE A 2 337 754**
**DE A 2 460 513**
**DE A 2 548 291**
**DE A 2 629 450**
**DE A 2 823 119**
**DE B 2 038 261**
**DE B 2 214 820**

(73) Patentinhaber : **Linde Aktiengesellschaft**
**Abraham-Lincoln-Strasse 21**
**D-6200 Wiesbaden (DE)**

(72) Erfinder : **Benkmann, Christian**
**Meisenstrasse 39**
**D-8032 Gräfelfing (DE)**

(74) Vertreter : **Schaefer, Gerhard, Dr.**
**Linde Aktiengesellschaft Zentrale Patentabteilung**
**D-8023 Höllriegelskreuth (DE)**

Jouve, 18, rue St-Denis, 75001 Paris, France

Druckwechsel-Adsorptionsverfahren und seine Anwendung bei der Herstellung organischer Säuren

Die Erfindung betrifft ein Druckwechsel-Adsorptionsverfahren zur Reinigung oder Trennung von Gasgemischen unter Verwendung mehrerer zyklisch umschaltbarer, jeweils gleiche Schaltzyklen durchlaufender Adsorber, wobei jeder Schaltzyklus jeweils mindestens eine Adsorptions-, zwei Entspannungs-, eine Desorptions- und eine Druckaufbauphase umfaßt.

Ein derartiges Verfahren ist beispielsweise aus der DE-B-20 38 261 vorbekannt. Das dort beschriebene, mit vier zyklisch umschaltbaren Adsorbern arbeitende Verfahren weist im Anschluß an die einzige Adsorptionsphase vier Entspannungsphasen, eine Desorptionsphase sowie drei Druckaufbauphasen auf. Die Desorption erfolgt durch Spülen mit dem während der zweiten Entspannungsphase abströmenden Gasgemisch. Das letzte Entspannungsgas wird, ebenso wie das während der Desorption mit den desorbierenden Komponenten angereicherte Spülgas, abgeblasen. Die ersten und dritten Entspannungsphasen finden jeweils im Druckausgleich mit anderen Adsorbern statt, die sich dann in ihren zweiten bzw. ersten Druckaufbauphasen befinden. Die zweite Entspannungsphase erfolgt bezüglich der während der Adsorption herrschenden Strömungsrichtung im Gleichstrom, die vierte und letzte Entspannungsphase im Gegenstrom. Die Adsorptionsfront befindet sich bei Abschluß der Adsorptionsphase noch innerhalb der Adsorberschüttung. Der Durchbruch der Adsorptionsfront findet frühestens nach Ablauf der beiden ersten Entspannungsphasen statt. Die volle Beladung der Adsorberschüttung tritt demnach erst bei einem gegenüber dem Adsorptionsdruck stark verminderten Druck ein. Die Aufnahmekapazität der Schüttung für die zu adsorbierenden Komponenten wird so nur bis zu einem gewissen Grade ausgenutzt, da die adsorbierte Menge mit sinkendem Druck abnimmt. Der Sinn dieser besonderen Verfahrensführung liegt darin, ein Spülgas zur Unterstützung der Desorption zu gewinnen, das die zu desorbierenden Komponenten praktisch nicht enthält, und das im vorliegenden Falle die Zusammensetzung des gereinigten Produktgases aufweist. Dies hat zur Folge, daß ein nicht unerheblicher Teil des zu gewinnenden Produktgases durch Abblasen verlorengeht, und zwar hauptsächlich während der durch Spülen erfolgenden Desorptionsphase, aber auch während der letzten Entspannungsphase, da das letzte Entspannungsgas ebenfalls noch Anteile des zu gewinnenden Produktgases enthält.

Die der Erfindung zugrundeliegende Aufgabe besteht darin, ein Verfahren der eingangs genannten Art bereitzustellen, das sich durch optimale Ausnutzung der Aufnahmekapazität der Adsorberschüttung sowie durch möglichst geringe Verluste an Produktgas auszeichnet.

Diese Aufgabe wird gemäß der Erfindung dadurch gelöst, daß die Desorption durch Spülen mit einem Fremdgas vorgenommen, an die Desorption eine Verdrängungsphase angeschlossen und die Verdrängung des Fremdgases mit Hilfe eines während einer Entspannungsphase abströmenden Gases oder Gasgemisches durchgeführt wird.

Die Anwendung dieser Maßnahmen bewirkt in erster Linie, daß während der Desorption kein Produktgas verlorengeht.

Weiterhin ist die Ursache für die obengeschilderten negativen Auswirkungen auf die Aufnahmekapazität der Adsorberschüttung beseitigt, da das Spülgas beim Verfahren der Erfindung auf grundsätzlich andere Weise bereitgestellt wird. Die Adsorptionsfront kann bereits während der Adsorptionsphase nahezu durch die gesamte Schüttung hindurchgeführt werden, so daß die Adsorption beim höchsten im Gesamtverfahren auftretenden Druck erfolgt. Der Durchbruch der Adsorptionsfront geschieht dann zu Beginn der ersten Entspannungsphase, die im allgemeinen mit der vorletzten Druckaufbauphase eines anderen Adsorbers zusammenfällt.

Das zum Spülen verwendete Fremdgas sollte ein im Vergleich zur adsorbierten Komponente schlecht adsorbierbares Inertgas sein, das im Falle des Abblasens keine die Umwelt schädigenden Auswirkungen haben sollte. Ist außer der Reinigung des nicht adsorbierten Produktgases noch die gesonderte Gewinnung der adsorbierten Komponente beabsichtigt, so empfiehlt es sich, ein Fremdgas zu verwenden, das von der zu desorbierenden Komponente auf technisch und wirtschaftlich einfache Weise getrennt werden kann.

Nach Abschluß der Desorptionsphase, die im allgemeinen auf dem niedrigsten Verfahrensdruck stattfinden wird, ist der Adsorber mit Fremdgas angefüllt. Um das durch die adsorptive Reinigung zu gewinnende Produktgas nicht mit Fremdgas zu verunreinigen, wird im direkten Anschluß an die Desorptionsphase eine Verdrängungsphase durchgeführt. Dabei wird das im Lückenvolumen der Adsorberschüttung stehende Fremdgas durch Einleiten von Entspannungsgas am einen Ende des Adsorbers durch das andere Adsorberende hinausgedrängt. Nach Abschluß der Verdrängungsphase ist der Adsorber demnach mit einem Gasgemisch angefüllt, das lediglich aus Bestandteilen des zu reinigenden Gasgemisches besteht. Die Druckaufbauphasen können nunmehr unmittelbar angeschlossen werden.

Eine vorteilhafte Weiterbildung der Erfindung besteht darin, die Verdrängung mit Hilfe des während der letzten Entspannungsphase abströmenden Gases oder Gasgemisches durchzuführen. Da auch dieses letzte Entspannungsgas im allgemeinen noch Anteile des zu gewinnenden Produktgases enthält, ergibt sich durch die genannte Maßnahme die Möglichkeit, auch diese Anteile weitgehend zurückzugewinnen. Die Produkt gasausbeute ist dementsprechend hoch. Aus demselben Grunde empfiehlt es sich, so vorzugehen, daß die zwischen Beginn und Ende der mit der Verdrängungsphase gekoppelten Entspannungsphase entstehende Druckdifferenz etwa gleich dem am Ende der Desorption herrschenden Druck ist. Das zur Verdrängung benutzte Entspannungsgasvolumen ist dann etwa genauso groß wie das zu verdrängende Fremdgasvolumen. Der Verlust an Entspannungsgas läßt sich dadurch im Idealfall auf Null reduzieren. Je höher die Reinheitsanforderungen bezüglich der im Produktgas noch enthaltenen Anteile an Fremdgas sind, desto mehr muß allerdings von der eben genannten Vorschrift abgewichen werden. Da nämlich die Verdrängungsfront, definiert als der Bereich, in dem sowohl Anteile an Fremdgas als auch an Entspannungsgas in merklichem Ausmaß vorhanden sind, eine gewisse Breite aufweisen wird, muß das Verdrängungsgasvolumen entsprechend vergrößert werden, damit eine einwandfreie Verdrängung des Fremdgases gewährleistet ist. Je nach der Breite dieser Verdrängungsfront wird dieser zusätzliche Anteil einen kleineren oder größeren Prozentsatz eines Adsorbervolumens ausmachen.

Das Verfahren der Erfindung ist überall dort mit Vorteil anwendbar, wo das nach Abtrennung gewisser Komponenten aus dem zu behandelnden Gasgemisch verbleibende Produktgas möglichst vollständig gewonnen werden soll, und wo gleichzeitig ausreichende Mengen an Fremdgas, d. h. an einem in dem adsorptiv zu behandelnden Gasgemisch nicht enthaltenen und im Verhältnis zu der oder den adsorbierten Komponenten dieses Gemisches schlecht absorbierbaren Gas, zur Verfügung stehen. Dabei ist es von untergeordneter Bedeutung, ob die abzutrennenden Komponenten verworfen werden oder ihrerseits als zweite Produktgasfraktion zu gewinnen sind.

Mit besonderem Vorteil ist das erfindungsgemäße Verfahren dann anwendbar, wenn ein geeignetes Fremdgas ohne weiteres zur Verfügung steht. So wird bei vielen chemischen und biochemischen Verfahren Sauerstoff benötigt, der durch Zerlegung von Luft gewonnen wird. Wird dieser Sauerstoff in der Reaktion nicht vollständig verbraucht, so entsteht häufig das Problem, einerseits die Reaktionsprodukte vom Sauerstoff abzutrennen und andererseits den verbleibenden Sauerstoff in die Reaktion zurückzuführen, um die Kosten der Luftzerlegung möglichst weitgehend zu senken. Bei der Abtrennung gasförmiger Reaktionsprodukte aus einem derartigen, aus einer Sauerstoff verbrauchenden Reaktion stammenden Gasstrom, der noch einen für die Rückführung in die Reaktion lohnenden Sauerstoffanteil enthält, kann der der Reaktion zuzuführende Sauerstoff durch Zerlegung von Luft gewonnen und insbesondere als Fremdgas zur Unterstützung der Desorption im Zuge der Luftzerlegung gewonnener Stickstoff verwendet werden. In diesem Fall erlaubt die aufgrund der Anwendung der Erfindung sehr weitgehende Rückgewinnung des Rückführsauerstoffs gleichzeitig eine Minimierung der Kosten für die Bereitstellung des gesamten benötigten Sauerstoffs und andererseits die gleichzeitige zweckmäßige Ausnutzung des dabei sowieso anfallenden Stickstoffs.

Als Beispiel für eine derartige Sauerstoff verbrauchende Reaktion sei die Ozonerzeugung genannt. Das dem Ozonisator, der zumeist auf der Basis elektrischer Entladungen arbeitet, entströmende Gasgemisch besteht weitgehend aus molekularem Sauerstoff und enthält einige Prozent Ozon. Dieser kann unter Anwendung des erfindungsgemäßen Verfahrens in einer Druckwechsel-Adsorptionsanlage vom Sauerstoff abgetrennt werden, wobei zur Desorption Stickstoff verwendet wird. Dieser Stickstoff wird, ebenso wie der dem Ozonisator zuzuführende Sauerstoff, mit Hilfe einer Luftzerlegungsanlage bereitgestellt. Derartige Ozonerzeugungsverfahren, unter Einschluß der Verwendung von in einer Luftzerlegungsanlage gewonnenem Stickstoff als Spülgas zur Unterstützung der Desorption des Ozons, sind zwar an sich bekannt (siehe beispielsweise die US-A 2 872 397), jedoch ist die Verfahrensführung gemäß der Erfindung auch in diesem speziellen Zusammenhang nicht vorbekannt, So besteht der Adsorptionszyklus des Verfahrens, das in der genannten US-A 2 872 397 beschrieben ist, aus einer Adsorptions- und einer Desorptionsphase mit je dazwischengeschalteten Evakuierungsphasen. Während der auf die Adsorptionsphase folgenden Evakuierungsphase wird das im Lückenvolumen verbleibende, aus Sauerstoff und Ozon bestehende Gasgemisch mit Hilfe einer Vakuumpumpe abgezogen und in den Ozonisator zurückgeführt. Auch im Anschluß an die nun folgende Desorption durch Spülen mit Stickstoff findet eine Evakuierung mit Hilfe einer Vakuumpumpe statt, um den im Adsorber verbleibenden Stickstoff abzusaugen und die anschließende Adsorptionsphase vorzubereiten. Bei dieser Verfahrensführung ist von Nachteil, daß ständig eine Vakuumpumpe betrieben werden muß, die abwechselnd mit Ozon angereicherten Sauerstoff oder Stickstoff abzupumpen hat. Außerdem wird der Ozonisator mit einem gewissen Anteil an zurückgeführtem Ozon belastet, was sich natürlich negativ auf die Ozonausbeute auswirkt.

Das Verfahren gemäß der Erfindung ist jedoch auch auf die Entfernung von Kohlendioxid und Wasserdampf aus wasserstofffreien Gasen anwendbar. Dies gilt besonders dann, wenn diese Gase durch partielle Oxidation kohlenwasserstoffhaltiger Materialien gewonnen wurden. In diesem Falle ist nämlich eine Luftzerlegungsanlage mit Vorteil zur Bereitstellung sowohl des für die partielle Oxidation benötigten Sauerstoffs als auch des für die Adsorption als Spülgas zu verwendenden Stickstoffs einsetzbar. Eine weitere spezielle Anwendungsmöglichkeit des Verfahrens der Erfindung ergibt sich im Rahmen der Herstellung organischer Säuren durch biologische Oxidation von Polysacchariden mit Sauerstoff.

Die folgenden Ausführungsbeispiele beziehen sich auf die beiden zuletzt genannten Anwendungsmöglichkeiten.

Figur 1 zeigt in schematischer Weise ein Verfahren, mit dem ein sauerstoffhaltiges Rückführgas aus einem Fermenter in einer aus vier Adsorbern bestehenden Adsorptionsanlage von Kohlendioxid gereinigt werden soll.

Figur 2 zeigt das Zeitablaufdiagramm zu dem in Figur 1 dargestellten Verfahren.

Figur 3 zeigt in schematischer Weise ein Verfahren, mit dem ein wasserstoffreiches Gas, das durch partielle Oxidation erzeugt wurde, in einer aus neun Adsorbern bestehenden Adsorptionsanlage von Kohlendioxid und Wasserdampf gereinigt werden soll.

Figur 4 zeigt das Zeitablaufdiagramm zu dem in Figur 3 dargestellten Verfahren.

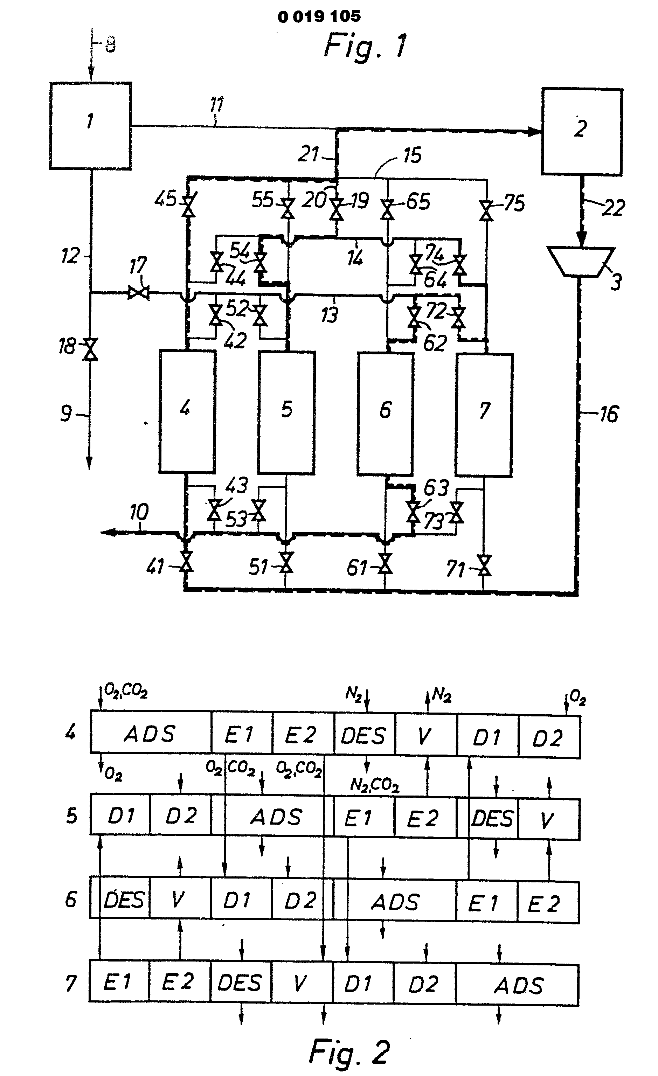

Das in Figur 1 dargestellte Verfahren dient zur Herstellung organischer Säuren aus Polysacchariden durch biologische Oxidation mit Sauerstoff. Der benötigte Sauerstoff wird in einer Luftzerlegungsanlage 1, vorzugsweise einer Tieftemperatur-Rektifikationsanlage, erzeugt. Die Fermentation findet in einem Fermenter 2 statt. Ein Kompressor 3 dient zur Verdichtung des dem Fermenter entströmenden Rückführgases, das Sauerstoff und als zu entfernende Komponente Kohlendioxid enthält. Zyklisch umschaltbare Adsorber 4, 5, 6, 7 dienen zur Abtrennung dieser Komponente, so daß der zurückgeführte Sauerstoff frei von Produkten der Fermentationsreaktion ist.

Aus der Luftzerlegungsanlage 1 werden durch eine Leitung 11 3,6 kmol/h hochangereicherten Sauerstoffs, bestehend zu 98 Vol.-% aus Sauerstoff und zu 2 Vol.-% aus Stickstoff und Argon, dem Fermenter zugeführt. Diese 3,6 kmol/h werden mit 18,7 kmol/h gereinigten Rückführsauerstoffs vereinigt, die über Leitungen 15 und 21 herangeführt werden. Dieser Rückführsauerstoff besteht zu 88,5 Vol.-% aus Sauerstoff und zu 11,5 Vol.-% aus Stickstoff und Argon. Beide zu vereinigenden Sauerstoffstoffströme befinden sich auf einem Druck von 4,5 bar. In den Fermenter werden schließlich 22,3 kmol/h eines zu 90 Vol.-% aus Sauerstoff und zu 10 Vol.-% aus Stickstoff und Argon bestehenden Gasstromes eingeführt. Ein Teil des zugeführten Sauerstoffs wird im Fermenter zu Kohlendioxid umgesetzt. Durch Leitung 22 wird ein zu 84,6 Vol.-% aus Sauerstoff, zu 10,6 Vol.-% aus Stickstoff und Argon sowie zu 4,8 Vol.-% aus Kohlendioxid bestehender Gasstrom in einer Menge von 21,1 kmol/h abgezogen, im Kompressor 3 von 3,5 auf 5 bar verdichtet und über eine Leitung 16 der Adsorptionsanlage zugeführt. Diese besteht im wesentlichen aus den vier zyklisch umschaltbaren Adsorbern 4 bis 7, die jeweils mit einer Schüttung aus weitporigem Silikagel gefüllt sind, das im Rückführgasstrom mitgeführtes Kohlendioxid selektiv zurückhält.

Die jeweils phasenverschobenen Schaltzyklen der Adsorber 4 bis 7 sind im Zeitablaufdiagramm der Figur 2 dargestellt. Jedem der vier Adsorber ist einer der waagerechten Balken zugeordnet. Die Zeit verläuft von links nach rechts. In Figur 1 sind durch stark ausgezogene bzw. gestrichelte Linien die im Diagramm der Figur 2 ganz links aufeinanderfolgenden beiden ersten Achtel eines Adsorptionszyklus dargestellt. Die stark durchgezogene Linie entspricht dem ersten Achtel, in dem sich der Adsorber 4 in der ersten Hälfte der Adsorptionsphase ADS, der Adsorber 5 in der ersten Druckaufbauphase D1, der Adsorber 6 in der Desorptionsphase DES und der Adsorber 7 in der ersten Entspannungsphase E1 befindet. Die gestrichelte Linie entspricht dem zweiten Achtel, in dem sich der Adsorber 4 in der zweiten Hälfte der Adsorptionsphase ADS, der Adsorber 5 in der zweiten Druckaufbauphase D2, der Adsorber 6 in der Verdrängungsphase V und der Adsorber 7 in der zweiten Entspannungsphase E2 befindet.

Die Adsorber sind ein- und austrittsseitig mit Ventilen zur Schaltung der einzelnen Zyklusschritte versehen. Beim Adsorber 4 sind dies die Ventile 41 und 43 auf der Eintrittsseite sowie 42, 44 und 45 auf der Austrittsseite. Bei den übrigen Adsorbern sind die entsprechenden Ventile durch die gleichen Endziffern in Verbindung mit der entsprechenden vorangestellten Adsorberbezifferung angegeben.

Der dem Fermenter 2 entströmende, zu reinigende Sauerstoff wird demgemäß über Leitungen 22 und 16 sowie ein geöffnetes Ventil 41 in den Adsorber 4 eingeführt, dort vom Kohlendioxid befreit sowie über ein geöffnetes Ventil 45 sowie Leitungen 15, 21 und 11 in den Fermenter zurückgeführt. Währenddessen befindet sich der Adsorber 7 in der ersten Entspannungsphase El, die unmittelbar auf die Adsorptionsphase ADS folgt. Dieser Adsorber wird dabei von seinem Auslaßende her über ein geöffnetes Ventil 74, eine Druckausgleichsleitung 14 sowie ein geöffnetes Ventil 54 vom Adsorptionsdruck auf einen Zwischendruck entlastet, wobei gleichzeitig der in der ersten Druckaufbauphase DI befindliche Adsorber 5 über sein Auslaßende auf annähernd den erwähnten Zwischendruck wiederaufgedrückt wird. Das bei diesem Druckausgleichsvorgang aus dem Adsorber 7 abströmende Gasgemisch entspricht in seiner Zusammensetzung in etwa dem in Leitung 16 strömenden Gasgemisch. Da die Adsorber während der Adsorptionsphase ADS jeweils bis unmittelbar vor den Durchbruch des Kohlendioxids beladen werden und die Adsorptionsfront eine gewisse Breite aufweist, ist das abströmende Druckausgleichsgas gegenüber dem in Leitung 16 strömenden Gasgemisch allerdings etwas mit Sauerstoff angereichert. Der am Ende des Druckausgleichs erreichte Zwischendruck beträgt ca. 3 bar. Unterdessen befindet sich der Adsorber 6 in seiner Desorptionsphase DES. Dabei wird ihm über sein Auslaßende sowie über eine Leitung 12, ein geöffnetes Ventil 17, eine Leitung 13 sowie ein geöffnetes Ventil 62 auf einem Druck von ca. 1 bar befindlicher trockener Stickstoff aus der Luftzerlegungsanlage 1 zugeführt. Dieser nimmt das desorbierende Kohlendioxid auf und führt es über ein geöffnetes Ventil 63 sowie eine Restgasleitung 10 mit sich fort. Dieses Restgas kann im allgemeinen abgeblasen werden. Die Menge des der Adsorptionsanlage über Ventil 17 insgesamt zugeführten Stickstoffs beträgt etwa 8 kmol/h. Die Zuführung dieser Gesamtmenge geschieht allerdings nicht kontinuierlich, da die Desorptionsphasen nicht lückenlos aufeinanderfolgen. Überschüssiger Stickstoff wird über ein Regelventil 18 sowie eine Leitung 9 in die Atmosphäre abgegeben oder zu anderen Zwecken gespeichert.

Während der Adsorber 4 in die zweite Hälfte der Adsorptionsphase eintritt, beginnt die zweite Entspannungsphase E2 des Adsorbers 7. Dessen Auslaßende wird über ein geöffnetes Ventil 72, Leitung 13 sowie ein geöffnetes Ventil 62 mit dem Auslaßende des Adsorbers 6 verbunden, der damit in die Verdrängungsphase V eintritt. Das zu Beginn der zweiten Entspannungsphase auf einem Druck von ca. 3 bar befindliche Entspannungsgas, das zu Anfang in etwa die Zusammensetzung des in Leitung 16 strömenden Gasgemisches hat und gegen Ende der zweiten Entspannungsphase hin eihen steigenden Anteil an Kohlendioxid aufweist, verdrängt den im Adsorber 6 stehenden Stickstoff durch dessen Einlaßende, das geöffnete Ventil 63 sowie die Restgasleitung 10. Die Verdrängungsphase V wird so durchgeführt, daß der gewünschte Verdrängungsgrad erreicht ist, sobald der Adsorber 7 auf einem Druck von ca. 1 bar angelangt ist. Im Normalfall wird dann der gesamte Stickstoff aus dem Adsorber 6 entwichen sein, dessen Lückenvolumen dann im wesentlichen mit Sauerstoff angefüllt ist. Der Druck im Adsorber 6 beträgt dann ebenfalls ca. 1 bar. Dies ist der niedrigste im Verfahren auftretende Druck. Der Adsorber 6 ist damit auf den Beginn des Druckaufbaus vorbereitet. Während dieser sich noch in der Verdrängungsphase V befindet, durchläuft der Adsorber 5 die zweite Druckaufbauphase D2. Sein Auslaßende ist dabei über das geöffnete Ventil 54, Leitung 14, das geöffnete Ventil 19 sowie Leitung 20 mit der Leitung 21 verbunden, in der gereinigter Sauerstoff, aus dem Adsorber 4 kommend, strömt. Ein Teil dieses Sauerstoffs wird nun abgezweigt und, bezüglich der während der Adsorptionsphase herrschenden Strömungsrichtung, im Gegenstrom in den Adsorber 5 geleitet. Dieser wird dabei von dem gegen Ende der ersten Druckaufbauphase D1 erreichten Zwischendruck, der ca. 3 bar beträgt, auf einen Druck von ca. 4,5 bar gebracht. Der während der zweiten Druckaufbauphase D2 über Leitung 20 abgezweigte Sauerstoffanteil beträgt ca. 10 % des über Ventil 45 abströmenden gereinigten Sauerstoffs. Soll der Fermenter 2 mit gleichbleibenden Sauerstoffmengen beschickt werden, so empfiehlt es sich, in die Leitung 11 stromabwärts bezüglich der Leitung 21 einen Pufferbehälter einzubauen und die diesem zu entnehmende, dem Fermenter zuzuführende Sauerstoffmenge über ein Regelventil konstant zu halten.

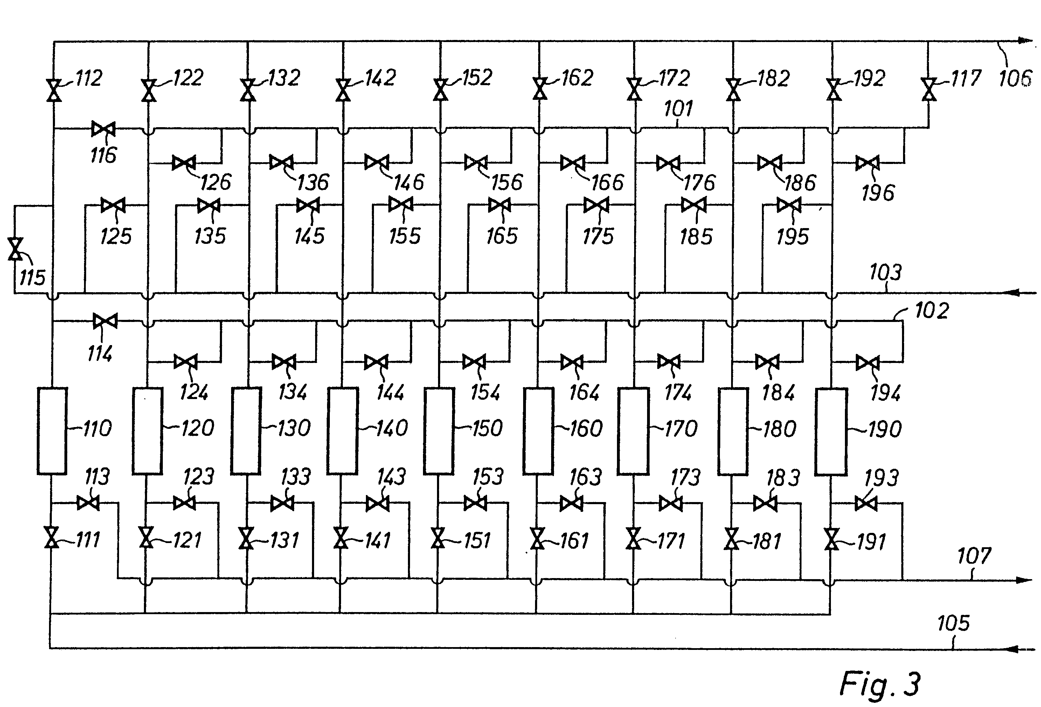

Figur 3 zeigt neun zyklisch umschaltbare, mit zeitlicher Versetzung jeweils identische Schaltzyklen durchlaufende Adsorber 110 bis 190. Diese sind jeweils über Ventile 111 bis 191 mit einer Rohgasleitung 105, die der Zuführung des noch ungereinigten wasserstoffreichen Gases dient, verbunden. Die Einlaßseiten der Adsorber 110 bis 190 sind weiterhin über Ventile 113 bis 193 an eine Restgasleitung 107 angeschlossen. Die Auslaßseiten der Adsorber 110 bis 190 sind zunächst über Ventile 112 bis 192 mit einer Produktleitung für das von Kohlendioxid und Wasserdampf gereinigte wasserstoffreiche Gas verbunden. Weiterhin stehen diese Auslaßseiten über Ventile 114 bis 194 mit einer Druckausgleichsleitung 102, über Ventile 116 bis 196 mit einer teils als Druckausgleichs-, teils als Verdrängungsgas- und teils als Druckaufbauleitung dienenden Leitung 101, die über ein Ventil 117 an die Produktgasleitung 106 angeschlossen ist, und über Ventile 115 bis 195 mit einer Spülgasleitung 103 in Verbindung.

Durch die Rohgasleitung 105 werden beispielsweise 4 500 kmol/h eines wasserstoffreichen Gases herangeführt, das zu ca. 65 Vol.-% aus Wasserstoff, zu ca. 10 Vol.-% aus Kohlenmonoxid und zu ca. 25 Vol.-% aus Kohlendioxid besteht und mit Wasserdampf gesättigt ist. Dieses wasserstoffreiche Gas steht unter einem Druck von 25 bar und hat eine Temperatur von 303 K. Es stammt aus einer partiellen Oxidation kohlenwasserstoffreicher Materialien, beispielsweise von Kohlenwasserstoffölen, mit anschließender teilweiser Konvertierung des Kohlenmonoxids zu Kohlendioxid. Das wasserstoffreiche Gas soll durch die Adsorption von Kohlendioxid und Wasserdampf soweit wie möglich befreit werden, um anschließend einer Wasserstoff- Kohlenmonoxid-Trennung unterzogen zu werden. In den mit weitporigem Silicagel beschickten Adsorbern werden bevorzugt das Kohlendioxid und der Wasserdampf zurückgehalten. Über die Produktgasleitung 106 strömen dann 3 260 kmol/h eines gereinigten Gases ab, das nunmehr zu ca. 86,88 Vol.-% aus Wasserstoff, zu ca. 13,1 Vol.-% aus Kohlenmonoxid und nurmehr zu ca. 0,02 Vol.-% aus Kohlendioxid besteht. Der Wasserdampfanteil ist unter 1 vppm gesunken. Durch die Spülgasleitung 103 werden 1 000 kmol/h gasförmigen Stickstoffs von 1,1 bar und 303 K zugeführt, der ebenso wie der für die partielle Oxidation benötigte Sauerstoff aus einer Luftzerlegungsanlage stammt.

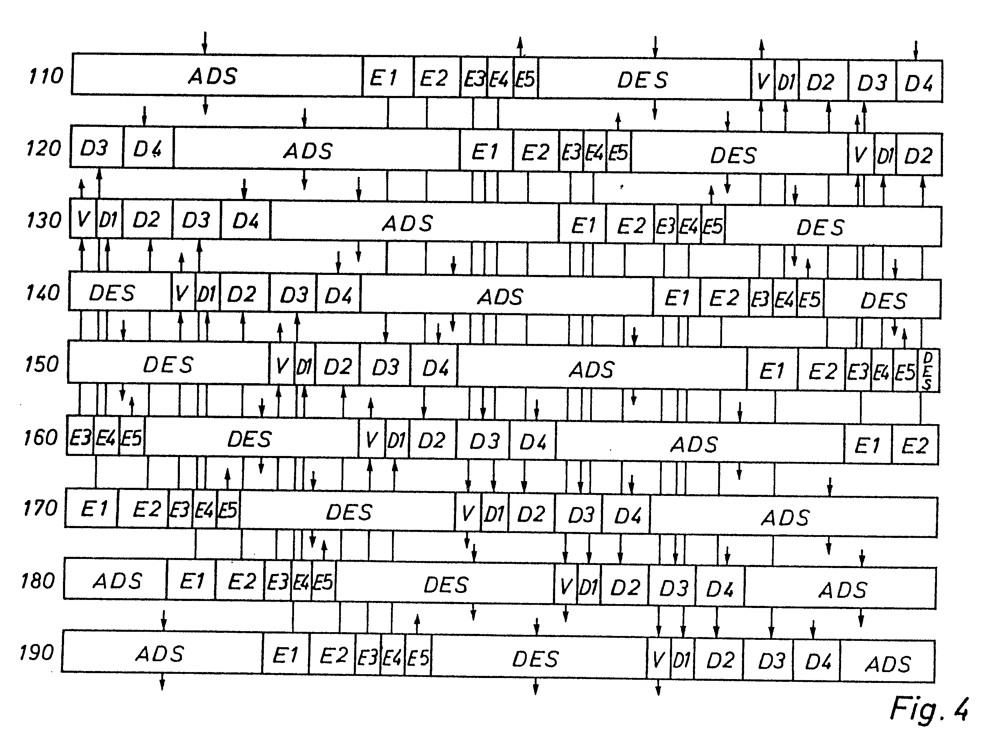

In Figur 4 ist das zur Figur 3 gehörende Zeitablaufdiagramm wiedergegeben. Die neun waagerechten Balken entsprechen den neun Adsorbern 110 bis 190. Die für alle Adsorber identischen Zyklen lassen sich in jeweils 36 kleinste funktionale Einheiten oder Takte unterteilen. Auf eine Adsorptionsphase ADS von 12 Takten Dauer folgt eine erste Entspannungsphase E1 von 2 Takten Dauer, die im Druckausgleich mit einer dritten Druckaufbaustufe D3 eines anderen Adsorbers betrieben wird, eine zweite Entspannungsphase E2 von ebenfalls zwei Takten Dauer, die im Druckausgleich mit einer zweiten Druckaufbaustufe D2 eines weiteren anderen Adsorbers betrieben wird, eine dritte Entspannungsstufe E3 von einer Taktlänge, deren Entspannungsgas im Anschluß an die Desorptionsphase DES eines anderen Adsorbers während der folgenden Verdrängungsphase V durch diesen hindurchgeleitet wird, eine vierte Entspannungsphase E4 von ebenfalls einer Taktlänge, die im Druckausgleich mit einer ersten Druckaufbaustufe D1 desselben anderen Adsorbers betrieben wird, eine fünfte Entspannungsstufe E5 von einer Taktlänge, deren Entspannungsgas durch die Restgasleitung 107 abgeblasen wird, und schließlich eine Desorptionsphase DES, während der Stickstoff als Spülgas durch den entsprechenden Adsorber geleitet wird, um den zunächst adsorbierten Wasserdampf sowie das ebenfalls zunächst adsorbierte Kohlendioxid mitzunehmen. Dieses Spülgas, das hinsichtlich des zu reinigenden Einsatzgases ein Fremdgas ist, wird in der anschließenden Verdrängungsphase V aus der Adsorberschüttung hinausgedrängt. Durch vier anschließende Druckaufbauphasen D1 bis D4 wird der Adsorber wieder auf den Adsorptionsdruck gebracht.

Die Adsorption erfolgt beim Adsorber 110 über die geöffneten Ventile 111 und 112, die erste Entspannung E1 im Gleichstrom über das geöffnete Ventil 114 und die Druckausgleichsleitung 102, ebenso wie die zweite Entspannung E2. Das Entspannungsgas der dritten Entspannungsphase E3 fließt über das geöffnete Ventil 116 und die Leitung 101 ab, um dann über ein entsprechendes geöffnetes Ventil in einen anderen Adsorber geleitet zu werden, um dort Spülgas zu verdrängen. Das Entspannungsgas der vierten Entspannungsphase E4 fließt ebenfalls über das geöffnete Ventil 116 und die Leitung 101 ab, um in dem zuvor in der Verdrängungsphase V befindlichen Adsorber einen ersten Druckaufbau D1 zu vollziehen. Das letzte, nunmehr bereits auf sehr niedrigem Druck befindliche und desorbierte Komponenten enthaltende Entspannungsgas der fünften Entspannungsphase E5 wird schließlich über das geöffnete Ventil 113 und die Restgasleitung 107 abgezogen. Der als Spülgas dienende Stickstoff gelangt in den Adsorber über die Spülgasleitung 103 sowie das geöffnete Ventil 115 und verläßt den Adsorber über das geöffnete Ventil 113 und die Restgasleitung 107. Bei der anschließenden Verdrängung V des Spülgases durchfließt das Verdrängungsgas die geöffneten Ventile 116 und 113. Der erste Druckaufbau D1 erfolgt über das geöffnete Ventil 116, der zweite Druckaufbau D2 über das geöffnete Ventil 114, ebenso wie der dritte Druckaufbau D3. Der vierte und letzte Druckaufbau D4 wird mit gereinigtem Produktgas durchgeführt, und zwar über die Leitung 101 sowie die geöffneten Ventile 117 und 116.

Bei den übrigen Adsorbern wird in entsprechender Weise vorgegangen.

Das zuletzt geschilderte Verfahren zeichnet sich dadurch aus, daß der im Zuge der Vorbehandlung des Einsatzgases mit Hilfe der Luftzerlegungsanlage sowieso gewonnene Stickstoff in vorteilhafter Weise als Spülgas verwendet werden kann, wodurch die Verluste an gereinigtem Produktgas auf ein Minimum gesenkt werden können. Gereinigtes Produktgas wird nur mehr für den letzten Druckaufbau D4 benötigt. Das hierzu erforderliche Volumen ist verhältnismäßig gering, da fünf Entspannungsstufen E1 bis E5 vorgesehen sind und die bei Beginn des letzten Druckaufbaus D4 noch vorliegende Druckdifferenz daher ebenfalls entsprechend gering ist.

## Ansprüche

1. Druckwechsel-Adsorptionsverfahren zur Reinigung oder Trennung von Gasgemischen, unter Verwendung mehrerer zyklisch umschaltbarer, jeweils gleiche Schaltzyklen durchlaufender Adsorber, wobei jeder Schaltzyklus jeweils mindestens eine Adsorptions-, zwei Entspannungs-, eine Desorptions- und eine Druckaufbauphase umfaßt, dadurch gekennzeichnet, daß die Desorption durch Spülen mit einem Fremdgas vorgenommen, an die Desorption eine Verdrängungsphase angeschlossen und die Verdrängung des Fremdgases mit Hilfe eines während einer Entspannungsphase abströmenden Gases oder Gasgemisches durchgeführt wird.

2. Verfahren nach Anspruch 1, dadurch gekennzeichnet, daß die Verdrängung mit Hilfe des während der letzten Entspannungsphase abströmenden Gases oder Gasgemisches durchgeführt wird.

3. Verfahren nach Anspruch 1 oder 2, dadurch gekennzeichnet, daß die zwischen Beginn und Ende der mit der Verdrängungsphase gekoppelten Entspannungsphase entstehende Druckdifferenz etwa gleich dem am Ende der Desorption herrschenden Druck ist.

4. Verfahren nach einem der Ansprüche 1 bis 3 zum Abtrennen gasförmiger Reaktionsprodukte aus einem einer Sauerstoff verbrauchenden Reaktion entstammenden, noch Sauerstoff enthaltenden Gasstrom, dessen Sauerstoffanteil in die Reaktion zurückzuführen ist, wobei der der Reaktion zuzuführende Sauerstoff durch Zerlegung von Luft gewonnen und als Fremdgas zur Unterstützung der Desorption im Zuge der Luftzerlegung gewonnener Stickstoff verwendet wird.

5. Anwendung des Verfahrens nach Anspruch 4 bei der Herstellung organischer Säuren durch biologische Oxidation von Polysacchariden mit Sauerstoff.

## Claims

1. A pressure swing adsorption process for purifying or separating gas mixtures using a plurality of cyclically switchable adsorbers each of which pass through identical switching cycles,

in which each switching cycle comprises at least one adsorption phase, two expansion phases, one desorption phase and one pressure build-up phase, characterised in that the desorption is carried out by purging with an alien gas, a displacement phase is connected to the desorption and the displacement of the alien gas is carried out with the aid of a gas or gas mixture which flows off during an expansion phase.

2. A process as claimed in Claim 1, characterised in that the displacement is carried out with the aid of the gas or gas mixture which flows off during the last expansion phase.

3. A process as claimed in Claim 1 or Claim 2, characterised in that the pressure difference which takes place between the start and the end of the expansion phase which is coupled to the displacement phase, is approximately equal to the pressure prevailing at the end of the desorption phase.

4. A process as claimed in one of Claims 1 to 3 for separating gaseous reaction products from a gas stream originating from a reaction using oxygen, which still contains oxygen and the oxygen content of which is to be recycled to the reaction, wherein the oxygen which is to be fed to the reaction is obtained by the separation of air and nitrogen obtained in the course of the air separation is used as the alien gas for promoting the desorption phase.

5. The use of the process as claimed in Claim 4 in the production of organic acids by the biological oxidation of polysaccharides with oxygen.

**Revendications**

1. Procédé d'adsorption avec alternance de pression pour épurer ou séparer des mélanges gazeux en utilisant plusieurs adsorbeurs commutables cycliquement et exécutant à chaque fois les mêmes cycles de fonctionnement, chaque cycle de fonctionnement comportant respectivement au moins une étape d'adsorption, deux étapes de détente, une étape de désorption et une étape de montée en pression, caractérisé en ce que la désorption est effectuée par balayage avec un gaz étranger, en ce que la désorption est suivie par une étape de refoulement et en ce que le refoulement du gaz étranger est effectué à l'aide d'un gaz ou d'un mélange gazeux déchargé pendant une étape de détente.

2. Procédé selon la revendication 1, caractérisé en ce que le refoulement est effectué à l'aide du gaz ou du mélange gazeux déchargé pendant la dernière étape de détente.

3. Procédé selon l'une des revendications 1 ou 2, caractérisé en ce que la différence de pression s'établissant entre le début et la fin de l'étape de détente couplée avec l'étape de refoulement est à peu près égale à la pression régnant à la fin de la désorption.

4. Procédé selon l'une des revendications 1 à 3, pour séparer des produits gazeux de réaction d'un courant gazeux qui est produit dans une réaction utilisant de l'oxygène, et qui contient encore de l'oxygène et dont la fraction d'oxygène doit être recyclée dans la réaction, l'oxygène à amener à la réaction étant obtenu par fractionnement de l'air et le gaz étranger étant constitué par de l'azote servant à renforcer la désorption au cours de la décomposition de l'air.

5. Application du procédé conforme à la revendication 4, à la fabrication d'acides organiques par oxydation biologique de polysaccharides avec de l'oxygène.

## Fig. 1

## Fig. 2

Fig. 3

Fig. 4

0 019 105